# EUROPEAN PATENT SPECIFICATION

(11) **EP 2 732 610 B1**
(45) Date of publication and mention of the grant of the patent: **01.04.2015**
(21) Application number: 12735526.1
(22) Date of filing: 13.07.2012
(51) Int. Cl.: H04M 3/22, H04W 12/12

(54) **A BYPASS DETECTION SYSTEM WITH FALSE POSITIVE AVOIDANCE**
UMLEITUNGSERKENNUNGSSYSTEM MIT FALSCH POSITIVER UMGEHUNG
SYSTÈME DE DÉTECTION DE DÉRIVATION AVEC ÉVITEMENT D'UN FAUX POSITIF

(30) Priority: 15.07.2011 EP 11174130
(43) Date of publication of application: 21.05.2014
(73) Proprietor: Meucci Solutions NV, 9050 Gent-Ledeberg (BE)
(72) Inventor: VAN DER MEEREN, Guy, B-9052 Gent (BE); TUYTTE, Conrad, B-9070 Destelbergen (BE); DE BONTRIDDER, Lieven, B-9500 Geraardsbergen (BE); PHILIPS, Peter, B-1910 Kampenhout (BE); MOUTON, Kenneth, B-9000 Gent (BE); VERLINDE, Dirk, B-8650 Houthulst (BE)
(74) Representative: Plas, Axel Ivo Michel
(86) International application number: PCT/EP2012/063759
(87) International publication number: WO 2013/010931

(56) References cited:
- US-A1- 2009 069 047
- US-A1- 2010 087 191
- US-A1- 2011 016 363

## Description

### Field of the Invention

The present invention generally relates to a system for detection of an interconnect bypass in telecommunication networks, especially in wireless telecommunication networks such as for example of the type GSM, UMTS or similar, but also in wired telecommunication networks.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess technical reliability and the quality of service of the interconnection facility so that the agreed upon or regulatory standards are met. Next to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of another network operator than the receiving operator or because the calling party is abroad and is making use of a partnering network operator that provides roaming services for its network operator, this call has to pass through the interconnection facility.

Sometimes there are attempts to bypass the interconnection facilities of the network operator in an attempt to make money by avoiding at least a part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator.

This leads to a direct loss of revenue for the receiving network operators and this leads to technical problems. First of all as the bypass operator uses end user facilities to provide a network interconnection. Furthermore the use of these end user facilities and the setup of a new call creates an additional interface. Therefor there is a serious risk of quality problems such as degraded quality of audio or data transmissions, interruptions during the call, a prolonged waiting time during the call initiation, unacceptable delays in the transmissions, .... Further, because of the bypass operators reroute the call by setting up a new call making use of end user facilities of the receiving operator, the CLI of the calling party will be replaced with the CLI of the new call. This leads to inconveniences for the receiving parties which receive an erroneous CLI, but can also have more serious safety issues involved when a call to emergency services or police is involved. Furthermore this also creates serious technical difficulties for automatic telephone switchboards that operate on the basis of the CLI of the incoming call.

A system for setting up test calls in a telecommunication network is known from for example WO99/01974 and WO2008/071857. These call charge verification systems generate a series of calls between different sites on one or more networks to enable the network operator to check the billing procedure of the network. These systems however rely on collection of billing data produced by the operator in order to extract data, such as for example the CLI for analysis. Therefor these systems require access to sensitive data of the telecommunication network operator. This data is sensitive because it is related to the calling behaviour of its customers which might be subjected to privacy regulations or because it relates to billing information which is considered as commercial know how of the telecommunication network operator. These problems are especially relevant if the call charge verification system is operated by third parties that offer such system as a service to the telecommunication network operator. As then extensive access by these third parties to information of the telecommunication network operator requires specific interfaces to be developed to provide access to the billing information for each specific telecommunication network operator. This is time and resource intensive and makes it difficult to scale the verification system to multiple telecommunication network operators. A further system is known from the prior art section of US2010/0087191 in which in paragraph [0004] a third party test call generation system is disclosed that relies on presentation of the CLI to the terminating test number in order to recognize SIM-boxes. Such a test call generation system originates a test call by third parties from abroad to the tested network. Still a further system is known from US2011/0016363 which discloses a device configured to compare terminal information about an operation and a call on a communication terminal with behaviour pattern models to determine whether or not the information is within a normal behaviour pattern or an abnormal behaviour pattern, and to output warning information to prevent a fraud. The behaviour patterns are implemented as probabilistic models which allow for calculation of a probability of a current behavior pattern by applying the current behaviour pattern to these models. This calculated probability is then used to determine whether the behaviour pattern is within a normal behaviour or an abnormal behaviour.

A known system that overcomes the abovementioned drawbacks is the Meucci system as described on their website: http://www.meucci-solutions.com. This system for detection of a bypass of an interconnect to a telecommunication network under test comprises means adapted to originate a test call to said telecommunication network under test from outside the telecommunication network under test and at least one receiver probe with a subscription for terminating said test call. Further this system comprises a control system configured to initiate the test call; receive from the receiver probe call information comprising a received calling line identification (CLI) of the test call; and analyse the received calling line identification (CLI) such that presence of the bypass can be detected. The Meucci system does not require an interface with the billing system as it obtains the received CLI of the test call from the receiver probe. However in this case difficulties can arise when for example by accident a legitimate client makes a call to one of the receiver probes at the time of a test call being originated and thus an incoming call expected at the receiver probe. Then there exists the risk that the call made by the legitimate client will lead to the conclusion that the phone number of the legitimated client, which appears as the received CLI of the test call, is associated with a bypass, as this received CLI could match the criteria used for evaluating whether a bypass is present as explained in more detail below and subsequently the legitimate client's subscription might get deactivated. This must be avoided as this poses a serious risk to the level of client satisfaction of the telecommunication network under test as it causes unacceptable inconveniences to a legitimate client.

As such there is a need for a system that can provide real time information about the availability of a bypass. This system should be able to be operated by third parties and should not require access to sensitive data of the telecommunication network operator nor should it require the interfaces to enable such access nor should it require access or an interface to network equipment. The system should also allow identification and/or disabling of one or more subscriptions used in the bypass with a reduced risk of concluding that the CLI of an inadvertent call made by a legitimate third party to one of the receiver probes of the system is a phone number in use in a bypass.

### Summary of the Invention

According to a first aspect of the invention there is provided a control system for a system for detection of a bypass of an interconnect to a telecommunication network, said control system configured to:
- initiate a plurality of test calls between at least one means adapted to originate a test call to a telecommunication network under test from outside the telecommunication network under test; and at least one receiver probe with a subscription for terminating said test call;
- receive from said receiver probe call information comprising a received calling line identification of the respective test calls;
- analyse the received calling line identification in order to detect the presence of the bypass when the bypass is present during the test call; and
- receive from said means and/or said receiver probe call information of said test call,
CHARACTERIZED IN THAT said control system is further configured to distinguish incoming third party calls on said receiver probe from said test calls through interfering call checks, wherein said interfering call checks comprise checking said call information for a specific sequence of events associated with said test call.

This allows for determining a suspicion of an interfering call in a very simple way by means of an interfering call check, which could also be referred to as false positive check, that is able to distinguish incoming third party calls from real test calls. If for example a test call has a specific sequence of events associated with it, such as for example three RING events after initiation, followed by a connection being established and a subsequent disconnect signal, then when a different sequence of events is detected, for example three RING events immediately followed by a disconnect signal, this could confirm a suspicion of the presence of an interfering call. Although this does not exclude a connection being established, it does not require that a connection is established such that the cost incurred by the test calls can be minimized. Furthermore no access is required to sensitive information of the network operator such as for example billing information nor does it require access or an interface to network equipment and it does not even require an intervention to the configuration of the network systems being managed by the telecom operator, nor does it pose any risk of disruption of customer communications. Furthermore no statistical analysis of a plurality of calls is required, nor any correlation with information from other test calls such as for example whether the detected CLI was already present in previous test calls or not.

According to an optional embodiment said interfering call checks further comprise checking said call information for a predetermined number of predetermined events associated with said test call.

This allows the system to distinguish incoming third party calls from real test calls in order to avoid erroneous disabling of subscriptions of those legitimate third parties in an efficient and reliable way and thus to determine a suspicion of an interfering call which could lead to a false positive bypass detection in a very simple way. If for example a test call has a specific sequence of events associated with it, such as for example three RING events after initiation, followed by a connection being established and a subsequent disconnect signal, then when a different sequence of events is detected, for example three RING events immediately followed by a disconnect signal, this could provide a suspicion of the presence of an interfering call.

According to an embodiment said interfering call checks comprise checking said call information for a predetermined number of RING events.

RING events are specifically advantageous for discriminating interfering calls because they can be varied easily in order to provide a recognizable pattern without necessitating the call to be picked up and thus incurring connection costs.

According to still a further embodiment, said interfering call checks comprise checking whether said predetermined number of predetermined events exceeds a predetermined maximum number associated with said test call.

This allows to differentiate test calls from interfering calls from legitimate customers by means of events of which the number differs and as such allows for a robust and simple detection of interfering calls that does not require a connection to be established.

According to an alternative embodiment, said interfering call checks further comprise checking said call information for a specific time delay between events associated with said test call. Optionally said interfering call checks comprise checking whether said specific time delay between events associated with said test call is within a predetermined range. Optionally said interfering call checks could also comprise checking said call information for a specific time delay between events associated with said test call, said events occurring only at said means, only at said receiver probe, or both at said means and said receiver probe.

This provides a very powerful way of performing the interfering call checks as the checks for the time delay between specific events can be tailored to specific test call scenario's, which allows to fine tune the interfering call check mechanism depending on for example the type of test call, such as for example a test call comprising a connection event versus a test call which does not establishes a connection, or depending on the type of means for initiating the test call or the type of receiver probes or the specific control system or the specific network under test. In this way the reliability of the interfering call checks can be increased.

According to still a further embodiment said interfering call checks comprise checking said call information for one or more of the following:
- information provided by the telecommunication network;
- missing data;
- presentation indicators; and
- multiple incoming calls.

A mismatch of one or more of these indicators with the call information expected from a test call raises a suspicion of an interfering third party call.

According to an alternative embodiment wherein the system is further configured to:
- pick up said test call at said receiver probe;
- play DTMF tones, noise or speech at one end of said test call, this means at said receiver probe or at said means;
- record said DTMF tones, noise or speech at the other end of said test call, this means at said means or said at receiver probe respectively, or record said DTMF tones, noise or speech at said one end of said test call after said DTMF tones, noise or speech were bounced back at said other end of said test call;
- correlate said DTMF tones, noise or speech played with said DTMF tones, noise or speech recorded.

This allows for a high level of reliability in discriminating a test call from interfering third party calls.

According to a further embodiment the received CLI of said interfering call is added to a blacklist. Advantageously said interfering call checks comprise checking whether said received CLI is comprised within said blacklist.

In this way the efficiency and reliability of the interfering checks is raised as for the result of a previous interfering call check can be recycled.

According to an alternative embodiment the control system at least partly is comprised within said receiver probe.

The control system can thus optionally be implemented in a distributed way, for example in order to speed up processing.

According to a second aspect of the invention, there is provided a system for detection of a bypass of an interconnect to a telecommunication network, characterised in that said system comprises a control system according to the first aspect of the invention, said system further comprising:
- at least one means adapted to originate a test call to a telecommunication network under test from outside the telecommunication network under test; and
- at least one receiver probe with a subscription for terminating said test call.

According to a third aspect of the invention, there is provided a method for detecting a bypass of an interconnect to a telecommunication network under test by means of said system according to the second aspect of the invention, said method comprising the steps of:
- said means originating a test call to said telecommunication network under test from outside the telecommunication network under test;
- said receiver probe terminating said test call; and
- said control system initiating the test call; receiving from said receiver probe call information comprising a received calling line identification of said test call; and analysing the received calling line identification in order to detect the presence of a bypass when the bypass is present during the test call; and receiving from said means and/or said receiver probe call information of said test call,
CHARACTERISED IN THAT the method comprises the further step of said control system performing interfering call checks for distinguishing incoming third party calls on said receiver probe from said test calls, wherein said interfering call checks comprise checking said call information for a specific sequence of events associated with said test call.

### Brief Description of the Drawings

Fig. 1 illustrates an embodiment according to the invention without the presence of a bypass;
Fig. 2 illustrates the embodiment according to Figure 1 with the presence of a bypass;
Fig. 3 shows a timing schedule of a test call; and
Fig. 4 shows an alternative timing schedule of a test call.

### Detailed Description of Embodiment(s)

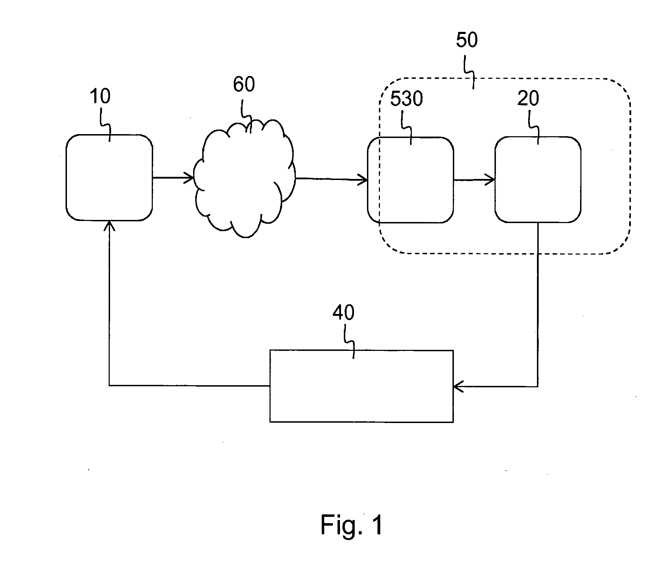

Figure 1 shows a system 1 for detection of a bypass of an interconnect 530 to a telecommunication network 50 under test. The system 1 according to the invention comprises a means 10 to originate a test call to said telecommunication network 50 under test from outside the telecommunication network 50 under test. This means 10 can be a suitable sender probe such as for example a GSM mobile phone or any other type of device capable of initiating a call on a predetermined outside telecommunication network other than the telecommunication network 50 of the network operator that is undertaking the investigation regarding the presence of a bypass of an interconnect 530, such as for example calling cards, a telephone number providing access to voip systems, call back mechanisms, any type of pc originating calls, a suitable subscription to mobile networks such as for example a SIM card, wireline networks or call generators directly connected to telecommunication network equipment. The means 10 can comprise for example a fixed line subscription in the UK "+44 20 1234 5678" and the telecommunication network 50 under test can for example be a telecommunication network of a Belgian mobile operator with a numbering plan with a 474 prefix, this means "+32 474 xxx xxx". The means 10 is for this purpose connected to a suitable control system 40 which enables to initiate the test call according to instructions received from this control system 40. The control system 40 is for example a suitably programmed computer that is directly connected to the means 10, but it might also be a remote computer system that is connected to the means 10 by means of a suitable network interface, such as for example a LAN or the internet, to enable exchange of instructions and/or data through this networks. It is clear that the system 1 for detection of a bypass is not limited to a system with only one means 10, it can however comprise any suitable number of means 10 dispersed among any suitable number of outside telecommunication networks, such as for example eight means 10 for different telecommunication networks in France and three means 10 for roaming telecommunication network partners in Ghana.

As can be seen in Figure 1 the bypass detection system 1 also comprises a receiver probe 20. This receiver probe 20 can for example also be a GSM mobile phone or any other type of device with a subscription for terminating the test call. The receiver probe 20 can for example comprise a subscription to the telecommunication network 50 under test "+32 474 123 456". The receiver probe 20 is also connected to a suitable control system 40. The control system 40 receives from the receiver probe 20 call information comprising a received calling line identification (CLI) of the test call. It is clear that the system 1 is also not limited to a system with only one receiver probe 20. It can comprise any suitable number of receiver probes 20 with a subscription for terminating test calls.

The call information comprises a received CLI of the test call and optionally other data relating to the call such as for example the time and date the test call was exactly received, the time and date at which the test call started ringing, the time and date at which the test call was terminated, an indicator for whether the test call was picked up, the phone number associated with the means 20, the presentation indicator, status or error information provided by the network such as for example release codes, error codes, status codes, network messages, etc..

As shown in Figure 1 when no bypass is present the control system 40 initiates the test call by activating the means 10 which subsequently originates the test call by calling the subscription to the telecommunication network 50 under test in the receiver probe 20. The test call is then sent to the telecommunication network 50 under test, for example optionally via one or more carriers 60. Subsequently the test call passes interconnect 530 of the telecommunication network 50 under test who routes the test call to the receiver probe 20. The receiver probe 20 then receives the incoming test call. It is not required for the receiver probe 20 to actually answer the test call. The control system 40 could for example be configured in such a way that it instructs means 10 to initiate the test call to the receiver probe 20 and to automatically disconnect the test call after allowing three rings. The control system 40 then receives from the predetermined receiver probe 20 call information that comprises a received CLI, which is transmitted just before or after the first ring, and optionally other data concerning the test call. This could be done for example by downloading the call information from the receiver probe 20 to the control system 40 or by transmitting it to the control system 40 in any suitable way, by for example a wired or wireless connection means. The control system 40 then analyses the received CLI.

This analysis can be executed as a simple comparison with the calling party number associated with means 10 that the control system 40 instructed to initiate the test call. In the case illustrated in Figure 1 where the test call passed through the interconnect facility 530 this received CLI, for example "+44 20 1234 5678", will match the calling party number, "+44 20 1234 5678", associated with means 10 and the control system 40 will be able to determine that for this test call no bypass was detected.

As the means 10 originates the test call from outside the telecommunication network 50 under test, the analysis can be done with even more reduced complexity and increased reliability. It can be determined whether the received CLI is a call that originated from within the telecommunication network 50 under test, this means an on net call, by for example analysing whether the prefix of the received CLI differs from the prefix associated with the numbering plan of the telecommunication network 50 under test. If this analysis of the received CLI indicates the calling party of the test call is not from within the telecommunication network under test, no bypass was detected. Thus as soon as the analysis is able to ascertain that the received CLI does not belong to the numbering plan associated with the telecommunication network 50 under test, no bypass within the network under test was detected. In order to also take into account number portability the analysis could comprise a check if the received CLI comprises a number which is comprised in the number database of the telecommunication network 50 under test. If this is not the case, no bypass within the network under test was detected. In general, because the means 10 originates the test call from outside the telecommunication network 50 under test, the presence of a bypass can be detected if the received CLI belongs to a subscription to the telecommunication network 50 under test.

Another possibility for analysis is to check if the received CLI comprises the same country code as the country code associated the telecommunication network 50 under test. As the means 10 in many cases originates a test call from a country other than the one from the telecommunication network 50 under test this provides a tool for determining whether a bypass is present.

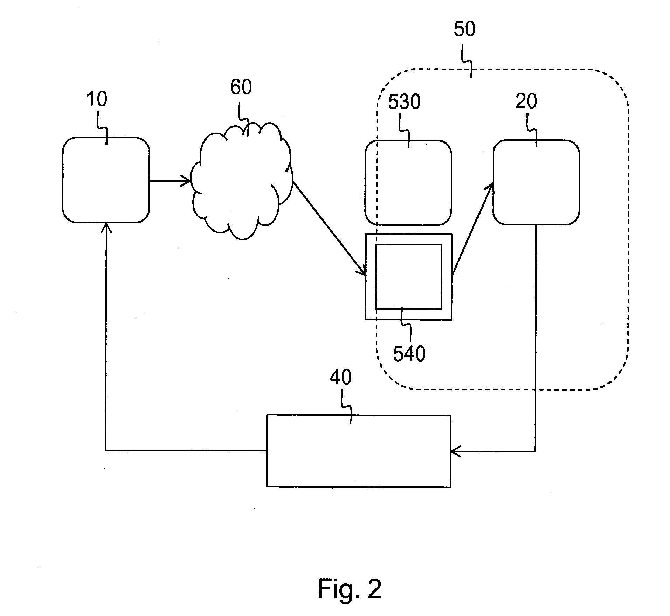

Figure 2 shows the same system 1 according to Figure 1 in operation, but now there is a bypass 540 in place and this bypass 540 reroutes the test call. When the control system 40 now initiates a test call between means 10 and receiver probe 20 and the call is rerouted optionally via one or more carriers 60 to the bypass 540 a detection of the bypass 540 is possible as explained below.

Such a bypass 540, also known as for example a GSM gateway or SIM box when it concerns a wireless telecommunication network or a leaky PBX when it concerns a wired telecommunication network, is operated by interconnection bypass operators that route part of the traffic to the telecommunication network 50 under test from outside telecommunication network 50 via for example a suitable internet interface with one of the carriers 60 towards a bypass 540 which normally makes use of a plurality of subscriptions, for example "+32 474 111 222", that operate within the telecommunication network 50 under test and which convert the incoming test call into a new call originating from a subscription to the telecommunication network 50, "+32 474 111 222", and to the same destination and as such bypass the interconnect 530. However when the control system 40 now receives the receiver call information from the receiver probe 20 that received the test call initiated from means 10, the received CLI, "+32 474 111 222" will not match the calling party number, "+44 20 1234 5678", associated with means 10. This is because instead of the calling party number of means 10, the calling party number of one of the subscriptions in the bypass 540, "+32 474 111 222", will be in the CLI received by receiver probe 20. The control system 40 is then able to assess that a bypass 530 is present.

As explained above because the means 10 originates the test call from outside the telecommunication network 50 under test, the presence of a bypass 540 can be detected if the received CLI belongs to a subscription to the telecommunication network 50 under test. This can be implemented by checking whether the received CLI comprises a prefix which belongs to the numbering plan of the telecommunication network 50 under test "+32 474 xxx xxx" or when to also take into account number portability by checking whether the received CLI comprises a number which is comprised in the number database of the telecommunication network 50 under test.

It could however happen that inadvertently a call from a third party interferes with a test call in process. For example because someone dialled the number of the receiver probe 20 by mistake. The received CLI would then be the phone number of that third party. Even if there is no bypass 540 present, the system would then detect that the number of the user that made this erroneous call does not match the calling party number associated with means 10. As such the analysis as described above would erroneously determine that there is a bypass 540 present and identify the subscription of that user as a subscription that is being used in the bypass 540. Subsequently this subscription might then be disabled. This has to be avoided as this poses a serious risk to the level of client satisfaction of the telecommunication network under test as it causes unacceptable inconveniences to a legitimate client. The third party associated with the interfering call could be a client of the network 50 under test, but alternatively it could also be a client of another network in the same country or any kind of end user, such as for example an international end user. Therefor according to the invention the system 1, by means of its control system 40, uses interfering call checks in order to distinguish incoming third party calls on said receiver probe 20 from test calls. In order to be able to perform this interfering call checks the control system 40 receives from means 10 and/or receiver probe 20 call information of the test call. This call information enables the control system 40 to determine if there is a suspicion that an interfering third party call may have occurred which could lead to the risk of a false positive bypass detection.

One possibility of call information that could be useful are the disconnect reasons. When the disconnect reasons don't correlate to that of a normal test call, then it can be determined that there was an interfering third party call. For example, if the receiving probe 20 has received a call but the means 10 receives a busy signal from the network, it is likely that the busy signal was generated because a third party at that moment was calling the receiving probe 20.

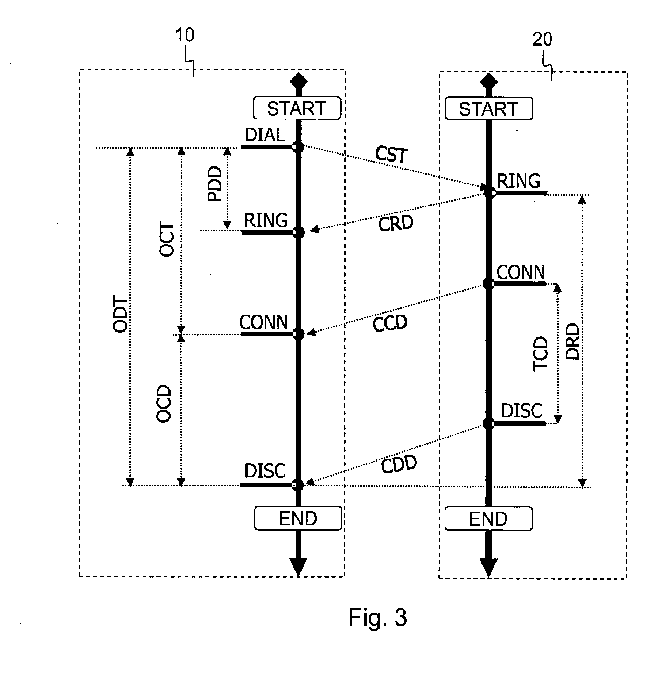

According to a further possibility the control system correlates the call information received from means 10 and/or receiver probe 20, which comprises timings, such as for example the start time of the test call, the duration of the test call, the ringing duration of the test call in order to detect an interfering third party call. Figure 3 shows a possible timing scenario during a test call. The left side of Figure 3 shows a plurality of events that occur in between the start and the end of a test call at the originating side of the test call, this means at means 10. The right side of Figure 3 shows the corresponding events that occur between the start and the end of a test call at the terminating side of the test call, this means at receiver probe 20. The illustrated events comprise dialling the phone number for terminating the test call on the receiver probe 20 which is indicated with the reference DIAL at the originating side 10. Subsequently after a delay referenced as Call Setup Time (CST), the terminating side 20 issues a ring, indicated with reference RING, which is subsequently received at the originating side, indicated with reference RING after a time Call Ring Delay (CRD). Then the terminating side 20 issues a connection signal (CONN) which is received at the originating side 10 after a time delay indicated as Call Connection Delay (CCD). Subsequently the terminating side issues a disconnect signal (DISC) which is received at the originating side 10 after a time delay indicated as Call Disconnect Delay (CDD), which precedes the end of the test call. It is clear, as explained above that during a test call the initiation of a connection is optional and the events occurring during a test call could be limited to a DIAL and one or more RING events as described above. The mere sequence of events as described above, this means DIAL then RING and so on can be used as interfering call checks. If for example the terminating RING event occurs before the originating DIAL event then an interfering call has been detected. Furthermore all end to end time delays as described above, such as for example CST, CRD, CCD, CDD, can be used of interfering call checks. For this purpose, for each respective time delay acceptable values can be determined, which occur during a normal test call pattern. If the time delay is outside this range then it can be determined that there was a suspicion of an interfering call. For example a CST lower than 2 seconds or higher than 40 seconds could be an indication of an interfering call.

As shown in Figure 3 a number of time delays can be monitored exclusively at the originating side 10, such as for example:
- PDD between the DIAL and RING event at the originating side 10;
- OCT between the DIAL and the CONN event at the originating side 10;
- OCD between the CONN and the DISC event at the originating side 10; and
- ODT between the DIAL and the DISC event at the originating side 10.

As shown in Figure 3 a number of time delays can be monitored exclusively at the terminating side 20, such as for example:
- TCD between the CONN and the DISC event at the terminating side 20.

As further shown in Figure 3 it is alternatively also possible to monitor time delays between events at both the originating side 10 as well as the receiving side 20, such as for example:
- Disconnect Ring Delay (DRD) between the first RING event at the originating side 10 and the DISC event at the terminating side 20.

For each of the time delays described above, whether there are differences between a delay at the originating side 10 and the terminating side 20 or between two delays at the originating side 10 or at the terminating side 20, minimum and maximum values may be determined in order to define ranges for these time delays such that when it is determined that one or more of these time delays are outside these ranges an interfering call is detected.

According to a further alternative embodiment it is also possible, instead of comparing the time delays associated with specific events during a test call with an absolute range, to compare correlated time delays. For example as indicated in Figure 3 the specific time delays indicated as TCD and OCD should be largely correlated and as such these respective time delays should have values that are equal within acceptable tolerances.

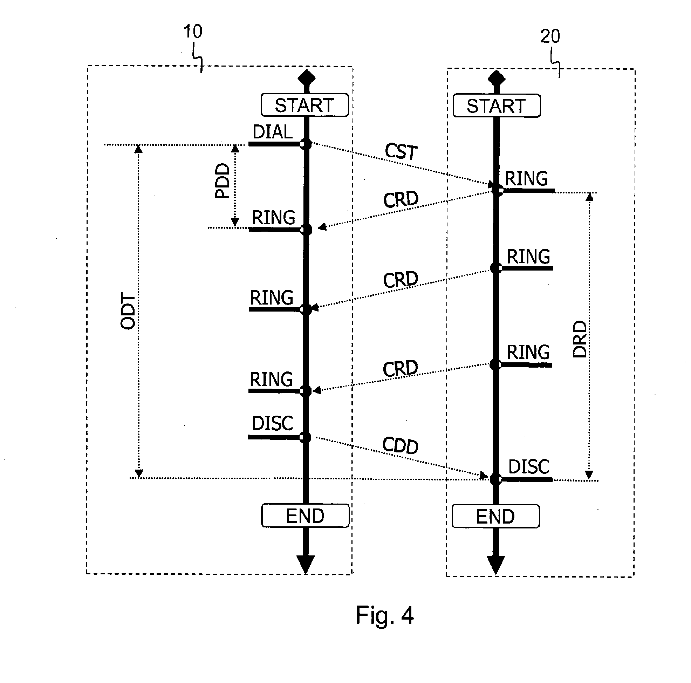

According to another example of a sequence of events associated with a test call, as shown in Figure 4, a DIAL event at the originating side 10 is followed by a RING event at the terminating side 20 after the CST time delay. This RING event is then received, at the originating side 10 after the CRD time delay. Subsequently two additional RING events occur at the terminating side 20 equally being received at the originating side 10 after the CRD time delay. Then, before a further RING event occurs at the terminating side and in this case without establishing a connection, the originating side 10 causes a disconnect event DISC which subsequently, after the CDD time delay, leads to a corresponding disconnect event DISC at the terminating side 20. When the control system 40 now receives call information of which the sequence of events or number of events differs from those associated with the test call as explained above, there is a suspicion of the presence of an interfering call. In this way it is possible to avoid a false positive bypass detection without the need to establish a connection and without any need for statistical analysis of a plurality of test calls or correlation with results from previous test calls.

According to still a further example the interfering call checks comprise checking the call information associated with the test call for a specific sequence of events. For a test call scenario as shown in Figure 4, whereby a disconnect event DISC at the originating side 10 causes a disconnect event DISC at the terminating side 20, this specific sequence of events can be used as an interfering call check to avoid the risk of a false positive bypass detection. When in the example described above a disconnect event DISC at the terminating side 20 is observed before a disconnect event DISC at the originating side 10 this could provide suspicion of the presence of an interfering call.

According to a further example the control system 40 is able to distinguish incoming third party calls from real test calls in order to avoid erroneous disabling of subscriptions of those legitimate third parties in an efficient and reliable way and thus to determine a suspicion of an interfering call when a test call has a specific sequence of events associated with it, such as for example three RING events after initiation, followed by a connection being established and a subsequent disconnect signal, then when a different sequence of events is detected, for example three RING events immediately followed by a disconnect signal, this could provide a suspicion of the presence of an interfering call. According to still a further example a sequence is detected in which a DIAL event at the originating side 10, followed by a RING event at terminating side 20, followed by a RING event at originating side 10. Then when subsequently in this sequence a RING event at terminating side 20 is observed and no corresponding RING event at the originating side 10 this could provide suspicion of the presence of an interfering call.

According to still a further embodiment an interfering call check might be implemented by checking whether a predetermined event has occurred a predetermined number of times. For example during the time frame of a single test call, as shown in Figure 3, an interfering call can be detected if two terminating RING events occur. One scenario in which this particular situation could arise is when a first call comes in at the Terminating side 20 and a few seconds later the receiving probe 20 disconnects and then still within the timeframe of the same test call (ODT), a second call comes in. One of those calls is likely to be an interfering call and the other the regular test call. In this case it may be decided to disregard this particular test call completely. According to another example, an interfering call can be detected when the number of times a RING event occurs at the originating side 10 is substantially different than at the terminating side 20. According to still a further example the fact that a certain event is not present at all could also form an indication of an interfering call, such as when for example a CONN event is present at the terminating side 20, but not at the originating side 10, or when both the terminating side 20 and the originating side 10 receive a DISC event, but none of both have sent one. According to another example a suspicion of an interfering call could be detected if a RING event is observed at the terminating side 20, but no corresponding RING event is observed at the originating side 10.

According to still a further example the interfering call checks could comprise checking whether said predetermined number of predetermined events exceeds a predetermined maximum number associated with the test call. This allows to differentiate test calls from interfering calls from legitimate customers by means of events of which the number differs. For example a human user will normally allow a call to exceed five RING events when no connection is established before disconnecting. When the number of RING events associated with a test call is chosen to be lower than five, then whenever more than five RING events are detected by the control system there is a detection of a suspicion of an interfering call. This maximum number for RING events to qualify for a test call could be implemented as a user defined parameter for the control system and as such allows for a robust and simple detection of interfering calls that does not require a connection to be established. As shown in relation with the test call events of Figure 4, it is not required to evaluate call information of both the originating side 10 and the terminating side 20. According to an embodiment it could suffice for the control system 40 to only evaluate whether the number of RING events at the terminating side 20, which is shown to be three, does not exceed the predetermined maximum number of for example five. It is clear that any other suitable number for a predetermined maximum could be chosen such as for example four or six.

According to still a further embodiment feedback from the telecommunication network, such as for example error codes or release codes, could form an indication of an interfering call. For example if there is received a busy signal at the originating side 10 and a RING event occurs at the originating side 20, this is a conflict that could indicate an interfering call. Also in the specific case when no feedback is received from the telecommunication network, when such feedback was expected, this could be an indication of an interfering call. Alternatively when an incoming call is on-going at the terminating side 20, either in the ringing phase, or when a connection is already established, an indication of a second incoming call could be received. Such an indication is commonly referred to as "call waiting". When such a call waiting indication is received at the terminating side 20 this provides for an indication that at least one of the two calls is received from an unintended source and one or both of these calls can be flagged by means of an interfering call check as a potential interfering call which could lead to a false positive bypass detection.

Also other call information such as for example the fact that no CLI was received, or for example if the test call at the originating side 10 was made with a presentation indicator set to restricted and the test call comes in at the terminating side 20 with the presentation indicator set to allowed, this could form an indication of an interfering call.

According to still a further embodiment the fact that the software running on a means 10 or a receiver probe 20 has not been able to execute a test script correctly or completely, this may also be a reason for determining that an interfering call may have happened

According to still a further possibility the timing of one or more signalling messages of the test call, such as for example: SS7 Initial Address Message (IAM); Address Complete Message (ACM); Answer Message (ANM), and similar signalling messages; or SIP Invite, Progress, OK, Ack, Bye, and similar signalling messages can be used. It is clear that equivalent signalling messages in use on the telecommunication network to user interface and network to network interface and other technologies also can be considered to be used to perform interfering call checks similar to the ones described above. These signalling messages are for example described in the call flow charts in SS7 specifications (ITU, 3GPP TS 03.18 ...), SIP specifications (RFC3261) and similar specifications for other technologies.

Another possibility could be that the call information indicates multiple incoming calls or other suitable parameters such as codes or missing data or presentation indicators that form an indication of an incoming third party call instead of a test call.

According to still a further embodiment according to the invention the interfering calls could be distinguished from real test calls by picking up incoming calls at the receiver probe 20, subsequently playing DTMF tones at one end of the call, such as for example at the receiver probe 20 or at means 10, and finally recording these DTMF tones at the other end of the call, such as for example at said means 10 or at receiver probe 20 respectively, or at the same end after a bounce back of the DTMF tones at the other end of the call. If an interfering third party call comes in at receiver probe 20 and it subsequently plays the DTMF tones then means 10 will not receive those DTMF tones and the control system 40 can determine that there was an interfering third party call instead of a real test call. Instead of DTMF tones it is alternatively possible to inject other content into the test call, such as for example noise or speech that is generated or played back at receiver probe 20 and subsequently received at means 10 so that the control system can correlate this in order to detect an interfering third party call.

If an interfering call is a call from a third party calling the receiver probe 20, it can be because of a wrong dial, for example as the result of a typo, or because of a call to a phone number that was cancelled and was subsequently reused in the subscription of the receiver probe 20. In the latter case, it is likely that this phone number is dialed again, for example because the outdated entry still exists in a phone book. Therefore, it may be useful to add the CLI of the third party calling the receiver probe to a blacklist. If such an interfering call would happen again, there is an additional criteria, namely that in the specific case the received CLI is a phone number mentioned in the blacklist, then an interfering call was detected. Optionally it may be useful to put all unscheduled incoming calls on the receiver probe 20 to a blacklist. An unscheduled incoming call is a call arriving when no test call is being performed.

It is clear that all above mentioned criteria for determining whether a suspicion of an interfering call was present can be evaluated individually and/or in combination. Furthermore it is clear that the criteria used may be dependent upon the telecommunication network 50 under test, means 10, the receiver probe 20 and the technologies in use. It is also clear that the criteria may depend on the specific type of test call. For example a test call with only RING events or a test call with a CONN event may be evaluated differently. Each of the mentioned criteria for determining whether a suspicion of an interfering call was present or any suitable combination of these criteria could be correlated to a predetermined level of certainty that the suspicion of an interfering call will actually relate to an interfering call being present. This means that for example that in the case there is for example a mismatch between the number of RING events could be an indication that there is a suspicion of an interfering call with for example 80% certainty, while for example call information indicating multiple incoming calls will provide 100% certainty an interfering call was present.

Alternatively, after a suspicion of an interfering call was detected, the operator of the network under test could also set up a subsequent check to determine to which client this phone number belongs and audit its profile, history and calling behaviour, or the operator could perform such check for all phone numbers reported as used for bypass

According to a first possibility the control system 40 for performing the interfering call checks could be implemented in the receiver probe 20 itself, but it is equally possible to provide a separate control system 40. Furthermore any suitable combination is possible such as for example a distributed control system (40) comprised at least partly within at least one receiver probe (20) and optionally also comprising a separate device forming part of this control system (40).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A control system (40) for a system for detection of a bypass (540) of an interconnect (530) to a telecommunication network (50), said control system (40) configured to:
• initiate a plurality of test calls between at least one means (10) adapted to originate a test call to a telecommunication network (50) under test from outside the telecommunication network (50) under test; and at least one receiver probe (20) with a subscription for terminating said test call;
• receive from said receiver probe (20) call information comprising a received calling line identification of the respective test calls;
• analyse the received calling line identification in order to detect the presence of the bypass (540) when the bypass (540) is present during the test call; and
• receive from said means (10) and/or said receiver probe (20) call information of said test call,
CHARACTERIZED IN THAT said control system (40) is further configured to distinguish incoming third party calls on said receiver probe (20) from said test calls through interfering call checks, wherein said interfering call checks comprise checking said call information for a specific sequence of events associated with said test call.

2. A control system according to claim 1, wherein said interfering call checks further comprise checking said call information for a predetermined number of predetermined events associated with said test call.

3. A control system according to claim 2, wherein said interfering call checks comprise checking said call information for a predetermined number of RING events.

4. A control system according to claim 2 or 3, wherein said interfering call checks comprise checking whether said predetermined number of predetermined events exceeds a predetermined maximum number associated with said test call.

5. A control system according to any of the preceding claims, wherein said interfering call checks further comprise checking said call information for a specific time delay between events associated with said test call.

6. A control system according to claim 5, wherein said interfering call checks comprise checking whether said specific time delay between events associated with said test call is within a predetermined range.

7. A control system according to claim 5 or 6, wherein said interfering call checks comprise checking said call information for a specific time delay between events associated with said test call, said events occurring:
• only at said means (10);
• only at said receiver probe (20); or
• both at said means (10) and said receiver probe (20).

8. A control system according any of the preceding claims, wherein said interfering call checks comprise checking said call information for one or more of the following:
• information provided by the telecommunication network;
• missing data;
• presentation indicators; and
• multiple incoming calls.

9. A control system according to any of the preceding claims, wherein the system is further configured to:
• pick up said test call at said receiver probe (20);
• play DTMF tones, noise or speech at one end of said test call, this means at said receiver probe (20) or at said means (10);
• record said DTMF tones, noise or speech at the other end of said test call, this means at said means (10) or said at receiver probe (20) respectively, or record said DTMF tones, noise or speech at said one end of said test call after said DTMF tones, noise or speech were bounced back at said other end of said test call;
• correlate said DTMF tones, noise or speech played with said DTMF tones, noise or speech recorded.

10. A control system according any of the preceding claims, wherein the received CLI of said interfering call is added to a blacklist.

11. A control system according to claim 10, wherein said interfering call checks comprise checking whether said received CLI is comprised within said blacklist.

12. A control system according to any of the preceding claims, **characterised in that** the control system (40) at least partly is comprised within said receiver probe (20).

13. A system for detection of a bypass (540) of an interconnect (530) to a telecommunication network (50), **characterised in that** said system comprises a control system (40) according to any of the preceding claims, said system further comprising:
• at least one means (10) adapted to originate a test call to a telecommunication network (50) under test from outside the telecommunication network (50) under test; and
• at least one receiver probe (20) with a subscription for terminating said test call.

14. A method for detecting a bypass (540) of an interconnect (530) to a telecommunication network (50) under test by means of said system according to claim 13, said method comprising the steps of:
• said means (10) originating a test call to said telecommunication network (50) under test from outside the telecommunication network (50) under test;
• said receiver probe (20) terminating said test call; and
• said control system (40) initiating the test call; receiving from said receiver probe (20) call information comprising a received calling line identification of said test call; analysing the received calling line identification in order to detect the presence of a bypass (540) when the bypass is present during the test call; and receiving from said means and/or said receiver probe call information of said test call,
CHARACTERISED IN THAT the method comprises the further step of said control system (40) performing interfering call checks for distinguishing incoming third party calls on said receiver probe (20) from said test calls, wherein said interfering call checks comprise checking said call information for a specific sequence of events associated with said test call.

## Patentansprüche

1. Steuersystem (40) für ein System zur Erkennung eines Bypasses (540) einer Zusammenschaltung (530) mit einem Telekommunikationsnetz (50), wobei das besagte Steuersystem (40) konfiguriert ist, um:
- eine Vielzahl von Testanrufen zwischen zumindest einem Mittel (10), das angepasst ist, um einen Testanruf zu einem Test-Telekommunikationsnetz (50) von außerhalb des Test-Telekommunikationsnetzes (50) zu generieren; und zumindest einem Empfangsprüfkopf (20) mit einem Abonnement zum Abschließen des besagten Testanrufs;
- vom besagten Empfangsprüfkopf (20) eine Anrufinformation zu empfangen, die eine empfangene Rufnummernanzeige der jeweiligen Testanrufe umfasst;
- die empfangene Rufnummernanzeige zu analysieren, um das Vorhandensein des Bypasses (540) zu erkennen, wenn der Bypass (540) während des Testanrufes vorhanden ist; und
- vom besagten Mittel (10) und/ oder dem besagten Empfangsprüfkopf (20) die Anrufinformation des besagten Testanruf zu erhalten,
**dadurch gekennzeichnet, dass** das besagte Steuersystem (40) darüber hinaus konfiguriert ist, um eingehende Anrufe von Dritten am besagten Empfangsprüfkopf (20) durch eingreifende Anrufüberprüfungen von den besagten Testanrufen zu unterscheiden, wobei die besagten eingreifenden Anrufüberprüfungen die Überprüfung der besagten Anrufinformation für eine spezifische Sequenz von Ereignissen umfassen, die dem besagten Testanruf zugeordnet sind.

2. Steuersystem nach Anspruch 1, wobei die besagten eingreifenden Anrufüberprüfungen darüber hinaus die Überprüfung der besagten Anrufinformation für eine vorbestimmte Anzahl von vorbestimmten Ereignissen umfassen die dem besagten Testanruf zugeordnet sind.

3. Steuersystem nach Anspruch 2, wobei die besagten eingreifenden Anrufüberprüfungen die Überprüfung der besagten Anrufinformation für eine vorbestimmte Anzahl von RING Ereignissen umfassen.

4. Steuersystem nach Anspruch 2 oder 3, wobei die besagten eingreifenden Anrufüberprüfungen die Überprüfung umfassen, ob die besagte vorbestimmte Anzahl von vorbestimmten Ereignissen eine vorbestimmte Höchstanzahl übersteigt, die dem besagten Testanruf zugeordnet sind.

5. Steuersystem nach irgendeinem der vorherigen Ansprüche, wobei die besagten eingreifenden Anrufüberprüfungen darüber hinaus die Überprüfung der besagten Anrufinformation für eine spezifische Zeitverzögerung zwischen den Ereignissen umfassen, die dem besagten Testanruf zugeordnet sind.

6. Steuersystem nach Anspruch 5, wobei die besagten eingreifenden Anrufüberprüfungen die Überprüfung umfassen, ob die besagte spezifische Zeitverzögerung zwischen Ereignissen, die dem besagten Testanruf zugeordnet sind, innerhalb eines vorbestimmten Bereiches liegt.

7. Steuersystem nach Anspruch 5 oder 6, wobei die besagten eingreifenden Anrufüberprüfungen die besagte Anrufinformation für eine spezifische Zeitverzögerung zwischen Ereignissen, die dem besagten Testanruf zugeordnet sind, umfassen, wobei die besagten Ereignisse eintreffen:
- nur am besagten Mittel (10);
- nur am besagten Empfangsprüfkopf (20); oder
- an beiden des besagten Mittels (10) und des besagten Empfangsprüfkopfs (20).

8. Steuersystem nach irgendeinem der vorherigen Ansprüche, wobei die besagten eingreifenden Anrufüberprüfungen die Überprüfung der besagten Anrufinformation für ein oder mehrere der folgenden Parameter umfassen:
- Information aus dem Telekommunikationsnetz;
- fehlende Daten;
- Darstellungsindikatoren; und
- mehrere eingehende Anrufe.

9. Steuersystem nach irgendeinem der vorherigen Ansprüche, wobei das System darüber hinaus konfiguriert ist, um:
- den besagten Testanruf am besagten Empfangsprüfkopf (20) anzunehmen;
- DTMF-Töne, ein Geräusch oder Sprache an einem Ende des besagten Testanrufs, das heißt am besagten Empfangsprüfkopf (20) oder am besagten Mittel (10), abzuspielen;
- die besagten DTMF-Töne, das Geräusch oder Sprache am anderen Ende des besagten Testanrufs, das heißt am besagten Mittel (10) oder am besagten Empfangsprüfkopf (20) aufzuzeichnen, oder die besagten DTMF-Töne, das Geräusch oder Sprache am besagten einen Ende des besagten Testanrufs aufzuzeichnen, nachdem die besagten DTMF-Töne, das Geräusch oder Sprache an das besagte andere Ende des besagten Testanrufs zurückgesetzt worden sind;
- die besagten DTMF-Töne, das Geräusch oder Sprache zu korrelieren, die mit den besagten aufgezeichneten DTMF-Tönen, dem Geräusch oder Gespräch abgespielt werden.

10. Steuersystem nach irgendeinem der vorherigen Ansprüche, wobei die empfangene CLI des besagten eingreifenden Anrufs in eine Sperrliste eingetragen wird.

11. Steuersystem nach Anspruch 10, wobei die besagten eingreifenden Anrufüberprüfungen die Überprüfung umfassen, ob die besagte empfangene CLI in der besagten Sperrliste enthalten ist.

12. Steuersystem nach irgendeinem der vorherigen Ansprüche, **dadurch gekennzeichnet, dass** das Steuersystem (40) zumindest teilweise im besagten Empfangsprüfkopf enthalten ist.

13. System (1) zur Erkennung eines Bypasses (540) einer Zusammenschaltung (530) mit einem Telekommunikationsnetz (50), wobei das System ein Steuersystem (40) nach irgendeinem der vorherigen Ansprüche umfasst, und das System darüber hinaus folgendes umfasst:
- zumindest ein Mittel (10), das angepasst ist, einen Testanruf in ein Test-Telekommunikationsnetz (50) von außerhalb des Test-Telekommunikationsnetzes (50) zu generieren; und
- zumindest einen Empfangsprüfkopf (20) mit einem Abonnement zum Abschließen des Testanrufs.

14. Verfahren zur Erkennung eines Bypasses (540) einer Zusammenschaltung (530) mit einem Test-Telekommunikationsnetz (50) durch das Mittel des besagten Systems nach Anspruch 13, wobei das besagte Verfahren die folgenden Schritte umfasst:
- das besagte Mittel (10) generiert einen Testanruf in das besagte Test-Telekommunikationsnetz (50) von außerhalb des Test-Telekommunikationsnetzes (50);
- der besagte Empfangsprüfkopf (20) schließt den besagten Testanruf ab; und
- das besagte Steuersystem (40) löst den Testanruf aus; der besagte Empfangsprüfkopf (20) erhält eine Anrufinformation, eine Rufnummernanzeige des besagten Testanrufs; die Analyse der empfangenen Rufnummernanzeige, um das Vorhandensein eines Bypasses (540) zu erkennen, wenn der Bypass während des Testanrufs vorhanden ist; und der Empfang vom besagten Mittel und/ oder vom Empfangsprüfkopf der Anrufinformation des besagten Testanrufs,
**dadurch gekennzeichnet, dass** das Verfahren darüber hinaus den Schritt des besagten Steuersystems (40) zur Durchführung von eingreifenden Anrufüberprüfungen zur Unterscheidung zwischen eingehenden Anrufen von Dritten am besagten Empfangsprüfkopf (20) und den besagten Testanrufe umfasst, wobei die besagten eingreifenden Anrufüberprüfungen die Überprüfung der besagten Anrufinformation für eine spezifische Sequenz von Ereignissen umfassen, die dem besagten Testanruf zugeordnet wird.

## Revendications

1. Système de commande (40) destiné à un système pour la détection d'une dérivation (540) d'une interconnexion (530) vers un réseau de télécommunication (50), ledit système de commande (40) étant configuré pour :
• initier une pluralité d'appels test entre au moins un moyen (10) adapté pour être à l'origine d'un appel test vers un réseau de télécommunication (50) soumis à un test depuis l'extérieur du réseau de télécommunication (50) soumis à un test ; et au moins une sonde de réception (20) avec un abonnement pour terminer ledit appel test ;
• recevoir de ladite sonde de réception (20) des informations d'appel comprenant l'identification de ligne appelante reçue des appels test respectifs ;
• analyser l'identification de ligne appelante reçue afin de détecter la présence de la dérivation (540) lorsque la dérivation (540) est présente durant l'appel test ; et
• recevoir dudit moyen (10) et/ou de ladite sonde de réception (20) des informations d'appel dudit appel test,
**caractérisé en ce que** ledit système de commande (40) est en outre configuré pour distinguer des appels tiers entrants sur ladite sonde de réception (20) desdits appels test au moyen de vérifications d'appel interférant, dans lequel lesdites vérifications d'appel interférant comprennent le contrôle desdites informations d'appel pour une séquence spécifique d'événements associés audit appel test.

2. Système de commande selon la revendication 1, dans lequel lesdites vérifications d'appel interférant comprennent en outre la vérification desdites informations d'appel pour un nombre prédéfini d'événements prédéfinis associés audit appel test.

3. Système de commande selon la revendication 2, dans lequel lesdites vérifications d'appel interférant comprennent la vérification desdites informations d'appel pour un nombre prédéfini d'événements RING.

4. Système de commande selon la revendication 2 ou 3, dans lequel lesdites vérifications d'appel interférant comprennent la vérification de si ledit nombre prédéfini d'événements prédéfinis dépasse un nombre maximum prédéfini associé audit appel test.

5. Système de commande selon l'une quelconque des revendications précédentes, dans lequel lesdites vérifications d'appel interférant comprennent en outre la vérification desdites informations d'appel pendant un délai de temporisation spécifique entre des événements associés audit appel test.

6. Système de commande selon la revendication 5, dans lequel lesdites vérifications d'appel interférant comprennent la vérification de si ledit délai de temporisation spécifique entre des événements associés audit appel test se trouve dans une fourchette prédéfinie.

7. Système de commande selon la revendication 5 ou 6, dans lequel lesdites vérifications d'appel interférant comprennent en outre la vérification desdites informations d'appel pendant un délai de temporisation spécifique entre des événements associés audit appel test, lesdits événements se produisant :
• uniquement au niveau dudit moyen (10) ;
• uniquement au niveau de ladite sonde de réception (20) ; ou
• à la fois au niveau dudit moyen (10) et de ladite sonde de réception (20).

8. Système de commande selon l'une quelconque des revendications précédentes, dans lequel lesdites vérifications d'appel interférant comprennent la vérification desdites informations d'appel pour un ou plusieurs des éléments suivants :
• des informations fournies par le réseau de télécommunication ;
• des données manquantes ;
• des indicateurs de présentation ; et
• des appels entrants multiples.

9. Système de commande selon l'une quelconque des revendications précédentes, où le système est en outre configuré pour :
• prendre ledit appel test au niveau de ladite sonde de réception (20) ;
• jouer des tonalités DTMF, un bruit ou des paroles à un bout dudit appel test, c'est-à-dire au niveau de ladite sonde de réception (20) ou au niveau dudit moyen (10) ;
• enregistrer lesdites tonalités DTMF, ledit bruit ou lesdites paroles à l'autre bout dudit appel test, c'est-à-dire au niveau dudit moyen (10) ou au niveau de ladite sonde de réception (20) respectivement, ou enregistrer lesdites tonalités DTMF, ledit bruit ou lesdites paroles au niveau dudit premier bout dudit appel test après que lesdites tonalités DTMF, ledit bruit ou lesdites paroles ont été renvoyés à l'envoyeur au niveau dudit autre bout dudit appel test ;
• corréler lesdites tonalités DTMF, ledit bruit ou lesdites paroles lues avec lesdites tonalités DTMF, ledit bruit ou lesdites paroles, enregistrés.

10. Système de commande selon l'une quelconque des revendications précédentes, dans lequel le CLI reçu dudit appel interférant est ajouté à une liste noire.

11. Système de commande selon la revendication 10, dans lequel lesdites vérifications d'appel interférant comprennent la vérification de si ledit CLI reçu est compris au sein de ladite liste noire.

12. Système de commande selon l'une quelconque des revendications précédentes, **caractérisé en ce que** le système de commande (40) est compris au moins partiellement au sein de ladite sonde de réception (20).

13. Système pour la détection d'une dérivation (540) d'une interconnexion (530) vers un réseau de télécommunication (50), **caractérisé en ce que** ledit système comprend un système de commande (40) selon l'une quelconque des revendications précédentes, ledit système comprenant en outre :
• au moins un moyen (10) adapté pour être à l'origine d'un appel test vers un réseau de télécommunication (50) soumis à un test depuis l'extérieur du réseau de télécommunication (50) soumis à un test ; et
• au moins une sonde de réception (20) avec un abonnement pour terminer ledit appel test.

14. Procédé pour détecter une dérivation (540) d'une interconnexion (530) vers un réseau de télécommunication (50) soumis à un test au moyen dudit système selon la revendication 13, ledit procédé comprenant les étapes consistant à :
• ledit moyen (10) étant à l'origine d'un appel test vers un réseau de télécommunication (50) soumis à un test depuis l'extérieur du réseau de télécommunication (50) soumis à un test ;
• ladite sonde de réception (20) terminant ledit appel test ; et
• ledit système de commande (40) initiant l'appel test ; la réception de la part de ladite sonde de réception (20) d'informations d'appel comprenant une identification de ligne appelante reçue dudit appel test ; l'analyse de l'identification de ligne appelante reçue afin de détecter la présence d'une dérivation (540) lorsque la dérivation est présente durant l'appel test ; et la réception de la part dudit moyen et/ou de ladite sonde de réception d'informations d'appel dudit appel test,
**caractérisé en ce que** le procédé comprend l'étape supplémentaire dudit système de commande (40) effectuant des vérifications d'appel interférant pour distinguer des appels tiers entrants sur ladite sonde de réception (20) desdits appels test, dans lequel lesdites vérifications d'appel interférant comprennent le contrôle desdites informations d'appel pour une séquence spécifique d'événements associés audit appel test.
